# EUROPÄISCHE PATENTSCHRIFT

(11) **EP 1 925 513 B1**
(45) Veröffentlichungstag und Bekanntmachung des Hinweises auf die Patenterteilung: **09.12.2009**
(21) Anmeldenummer: 07021207.1
(22) Anmeldetag: 30.10.2007
(51) Int. Cl.: B60S 5/06

(54) **Flurförderzeug mit einer Vorrichtung zum seitlichen Ausziehen einer Energieversorgungseinheit**
Industrial truck with a device for removing an energy supply unit laterally
Chariot de manutention doté d'un dispositif d'extraction latérale d'une unité d'alimentation en énergie

(30) Priorität: 23.11.2006 DE 102006055362
(43) Veröffentlichungstag der Anmeldung: 28.05.2008
(73) Patentinhaber: STILL GmbH, 22113 Hamburg (DE)
(72) Erfinder: Strugg, Gerald, Xiamen 361009 (CN); Bavendiek, Rainer, Dr., 21465 Wentorf (DE); Bergmann, Ansgar, 22941 Bargtheide (DE); Evert, Rainer, 22939 Rausdorf (DE); Lundelius, Jens, 22929 Schönberg (DE)
(74) Vertreter: Geirhos, Johann

(56) Entgegenhaltungen:
- EP-A- 1 396 401
- EP-A- 1 661 847
- DE-A1-102005 022 094
- DE-A1-102005 025 647
- US-A- 4 055 260

## Beschreibung

Die Erfindung betrifft ein Flurförderzeug mit einer Vorrichtung zur seitlichen Entnahme einer Energieversorgungseinheit, umfassend mindestens eine in eine Position seitlich des Fahrzeugs bringbare Haltevorrichtung und mindestens ein an der Haltevorrichtung angeordnetes, von einer angehobenen Position (Fahrposition) in eine auf eine Fahrbahnoberfläche abgesenkte Position (Entnahmeposition) bewegbares Standelement sowie ein Verfahren zum Betrieb einer Vorrichtung zur seitlichen Entnahme einer Energieversorgungseinheit aus einem Flurförderzeug, umfassend mindestens eine in eine Position seitlich des Fahrzeugs bringbare Haltevorrichtung und mindestens ein an der Haltevorrichtung angeordnetes, von einer angehobenen Position (Fahrposition) in eine auf eine Fahrbahnoberfläche abgesenkte Position (Entnahmeposition) bewegbares Standelement sowie Mittel zur Erfassung der Position des Standelements.

Flurförderzeuge, insbesondere Gegengewichtsgabelstapler, sind insbesondere in jüngerer Zeit häufig mit einer seitlichen Batterieentnahmeöffnung ausgeführt. Um den Batterieblock oder eine andere Energieversorgungseinheit, beispielsweise eine Brennstoffzelleneinheit, zu wechseln, wird der im Gabelstapler vorhandene Batterieblock in horizontaler Richtung aus dem Batteriefach des Gabelstaplers heraus bewegt.

Häufig ist es bei den Betreibern von Gabelstaplern üblich, die Batterieblöcke mittels eines Krans zu transportieren. Um dies bei Gabelstaplern mit einer seitlichen Batterieentnahmeöffnung zu ermöglichen, muss der Batterieblock zunächst vollständig aus dem Batteriefach heraus bewegt werden. Erst dann kann der Batterieblock an den Kran angehängt und angehoben werden. Analog hierzu kann während des Einsetzens in das Batteriefach der Batterieblock mittels des Krans nur neben die Entnahmeöffnung bewegt werden. Um den Batterieblock dann in horizontaler Richtung durch die Entnahmeöffnung in das Batteriefach zu bewegen, bedarf es einer Hilfsvorrichtung.

Hilfsvorrichtungen, die es erlauben, den Batterieblock ohne Zuhilfenahme eines Gabelhubwagens in horizontaler Richtung in das Batteriefach hinein oder aus dem Batteriefach heraus zu bewegen,_sind im Stand der Technik bereits bekannt. In der DE 102 40 854 A1 ist beispielsweise beschrieben, unten im Batteriefach als Haltevorrichtung für die Batterie bei der Entnahme eine ausziehbare Rollenbahn anzuordnen. Nach dem Ausziehen der Rollenbahn kann der Batterieblock auf der Rollenbahn vollständig aus dem Batteriefach heraus gerollt werden.

Wenn sich die Batterie neben dem Flurförderzeug befindet, liegt ihr gesamtes Gewicht auf der Haltevorrichtung. lst diese nur am Flurförderzeug befestigt, kann sich der Gesamtschwerpunkt des Fahrzeugs durch das außerhalb der Radbasis befindliche Gewicht der Batterie soweit verschieben, dass das Fahrzeug umzukippen droht. Zudem muss die Entnahmevorrichtung sehr stabil ausgeführt werden, um das Gewicht der Batterie auf das Flurförderzeug übertragen zu können. Daher ist es, beispielsweise aus der DE 10 2005 025 647, bekannt, ein an der Führungsvorrichtung angeordnetes, von einer angehobenen Position (Fahrposition) in eine auf eine Fahrbahnoberfläche abgesenkte Position (Entnahmeposition) bewegbares Standelement vorzusehen. Ist das Standelement abgesenkt, stützt sich die Haltevorrichtung teilweise auf diesem ab, so dass das Flurförderzeug nicht mehr umkippen kann und Kräfte, die auf die Befestigung der Haltevorrichtung am Flurförderzeug wirken, reduziert werden.

Dokument DE-A-10 2005 022 094 offenbart ein Flurförderzeug und Verfahren gemäß dem Oberbegriffen der Anspruche 1 und 14.

Um den Vorgang weitestgehend zu automatisieren, Zeit einzusparen und die Bedienperson von körperlicher Arbeit zu entlasten, kann das Ausschwenken oder Ausfahren des Standelements beispielsweise mittels einer Antriebsvorrichtung vorgenommen werden. Aufgrund von Bodenunebenheiten, unterschiedlichen Belastungen durch unterschiedliche Batterietypen sowie Veränderungen der Bodenfreiheit des Flurförderzeugs kann der Abstand der Haltevorrichtung zur Fahrbahnoberfläche jedoch variieren und damit auch der Weg, den das Standelement von der Fahrposition in die Standposition zurückzulegen hat.

Gelangt das Standelement in Bodenkontakt, muss ein weiteres unkontrolliertes Ausfahren unbedingt vermieden werden, um Überlastung oder Beschädigungen an, dem Standelement, der Haltevorrichtung, einer möglichen Antriebsvorrichtung des Standelements oder dem Flurförderzeug zu vermeiden. Zu diesem Zweck kann ein Bodenkontaktsensor, beispielsweise ein am bodenseitigen Teil des Standelements angeordneter druckempfindlicher Schalter, vorgesehen sein. Derartige Bodenkontaktsensoren müssen aufwändig mittels einer Kabelverbindung mit der Antriebsvorrichtung verbunden werden. Die Sensoren wie die Kabelverbindung sind weiterhin hohem Verschleiß ausgesetzt und daher fehleranfällig. Häufig weist das Standelement bodenseitig auch eine Rolle auf, so dass die Anbringung eines einfachen Druckschalters nicht oder nur mit erhöhtem Aufwand möglich ist.

Der Erfindung liegt daher die Aufgabe zugrunde, ein Flurförderzeug gemäß dem Oberbegriff des Anspruchs 1 zur Verfügung zu stellen, bei dem der Bodenkontakt des Standelements mit einfachen Mitteln sicher detektierbar ist.

Der Erfindung liegt weiterhin die Aufgabe zugrunde, ein Verfahren zum Betrieb einer Vorrichtung zur seitlichen Entnehme einer Energieversorgungseinheit aus einem Flurförderzeug gemäße dem Oberbegriff von Anspruch 14 zu schaffen, bei dem der Bodenkontakt des Standelements mit einfachen Mitteln sicher detektiert wird.

Diese Aufgabe wird bezüglich des Flurförderzeugs erfindungsgemäß dadurch gelöst, dass Mittel zur Erfassung der Position des Standelements vorgesehen sind. Indem die Position des Standelements erfasst wird, kann detektiert und gegebenenfalls angezeigt werden, ob und wie weit das Standelement ausgefahren ist. Aus der Veränderung der Position kann zudem darauf geschlossen werden, ob sich das Standelement noch bewegt oder auf einen Wderstand, insbesondere auf die Fahrbahnoberfläche, getroffen ist.

Es ist besonders vorteilhaft, wenn das Standelement schwenkbar an der Haltevorrichtung angeordnet ist. Dies ermöglicht einen einfachen Aufbau ohne aufwändige Gleitführungen, wie beispielsweise bei teleskopierbaren Vorrichtungen erforderlich.

In einer zweckmäßigen Weiterbildung der Erfindung umfassen die Mittel zur Erfassung der Position des Standelements mindestens einen Schwenkwinkelsensor. Bei der Verwendung von ausschwenkbaren Standelementen sind Schwenkwinkelsensoren eine besonders einfache Möglichkeit, die Position des Standelements zu überwachen. Schwenkwinkelsensoren sind in einer Vielzahl von Ausführungen nach unterschiedlichen Konstruktionsprinzipien erhältlich und so dass eine besonders gut an den jeweiligen Anwendungsfall angepasste Version ausgewählt werden kann.

Es ist besonders vorteilhaft, wenn das Standelement mittels einer Antriebsvorrichtung von der angehobenen in die abgesenkte Position bewegbar ist. Der Bedienperson bleibt körperliche Arbeit erspart und der Ausfahrvorgang kann weitgehend automatisiert werden.

Indem die Antriebsvorrichtung Mittel zur Erfassung der Position des Standelements aufweist, wird ein einfacher und Platz sparender Aufbau erreicht.

In einer zweckmäßigen Weiterbildung der Erfindung ist die Antriebsvorrichtung als elektrische Antriebsvorrichtung, insbesondere umfassend einen Elektromotor, ausgebildet. Elektromotoren sind einfach und robust und in einer Vielzahl von Varianten verfügbar, so dass eine ideale Anpassung an die Anforderungen möglich ist. Die Ansteuerung elektrischer Funktionen ist einfach möglich und Energie jederzeit direkt aus der Energieversorgungseinheit verfügbar.

Weiterhin ist es vorteilhaft, wenn der Elektromotor als Schrittmotor ausgebildet ist. Schrittmotoren bieten eine gute Positionierbarkeit und ermöglichen eine Detektion der eingenommenen Position.

In einer weiteren zweckmäßigen Ausgestaltung der Erfindung weist die Antriebsvorrichtung mindestens ein hydraulisches und/oder pneumatisches Antriebselement auf. Insbesondere hydraulische Antriebe bieten eine hohe Verstellkraft und sind in Flurförderzeugen für andere Funktionen häufig gebräuchlich, weshalb die zur Versorgung derartiger Antrieb notwendigen Komponenten bereits im Flurförderzeug vorgesehen sind.

Vorteilhafterweise ist mindestens eine Vorrichtung zur Steuerung der Bewegung des Standelements vorgesehen. Mit einer Steuerungsvorrichtung kann die Bewegung des Standelements überwacht und automatisiert werden.

Weiterhin ist es von Vorteil, wenn der Schwenkwinkelsensor als Potentiometer, insbesondere als zweispuriges Potentiometer ausgebildet ist. Potentiometer sind als Schwenkwinkelsensoren gut erprobt, zuverlässig sowie kostengünstig und die Messwerte können einfach eingelesen und weiterverarbeitet werden. Als doppelspurige Ausführung weisen sie zudem aufgrund der Redundanz eine hohe Sicherheit auf.

Es ist besonders vorteilhaft, wenn die Mittel zur Erfassung der Position des Standelements mit mindestens einer Steuerungsvorrichtung zur Steuerung der Vorrichtung zur seitlichen Entnahme einer Energieversorgungseinheit in Wirkverbindung stehen. Basierend auf den Daten zur Position des Standelements kann der seitliche Entnahmevorgang gesteuert und so automatisiert werden.

lndem die Steuerungsvorrichtung Bestandteil einer Fahrzeugsteuerung ist, wird ein einfacher Aufbau erreicht. Zudem wird ein Sicherheitsgewinn erzielt, indem beispielsweise während des Entnahmevorgangs die sonstigen Funktionen des Flurförderzeugs deaktiviert sind.

Zweckmäßigerweise ist eine Vorrichtung zur Arretierung des Standelements, vorzugsweise in der Standposition, vorgesehen. Dadurch wird sichergestellt, dass das Standelement in seiner Stellung verharrt und so eine Beschädigung der Entnahmevorrichtung und/oder des Flurförderzeugs und der Energieversorgungseinheit verhindert werden.

Bezüglich des Verfahrens wird die Aufgabe erfindungsgemäß dadurch gelöst, dass die Änderung der Position des Standelements in Abhängigkeit von der Zeit erfasst wird. lndem nicht nur die Position des Standelements erfasst wird sondern auch die Änderung, kann detektiert werden, ob sich das Standelement noch bewegt oder durch einen Defekt, das Auftreffen auf einem Hindernis oder der Fahrbahnoberfläche verlangsamt wird oder gar zum Stillstand gekommen ist. So können geeignete Maßnahmen ergriffen werden, um Beschädigungen am Flurförderzeug und der Vorrichtung zur Entnahme der Energieversorgungseinheit zu verhindern.

Es ist besonders vorteilhaft, wenn das Standelement als ordnungsgemäß ausgefahren detektiert und eine Antriebsvorrichtung zur Bewegung des Standelements deaktiviert wird, wenn innerhalb einer festgesetzten Zeitspanne keine wesentliche Positionsveränderung des Standelements festgestellt wird. Da die Antriebsvorrichtung für das Standelement nicht ausreichend hohe Kräfte aufbringt, um die Energieversorgungseinheit oder gar die Energieversorgungseinheit und das Flurförderzeug anzuheben, wird beim Auftreffen des Standelements auf ein unnachgiebiges Hindernis die Bewegung des Standelements bis zum Stillstand abgebremst. Die Fahrbahn stellt ein derartiges unnachgiebiges Hindernis dar. Die Zeitspanne wird in Abhängigkeit von der Verfahrgeschwindigkeit des Standelements sowie der Belastbarkeit der Antriebsvorrichtung so gewählt, dass eine Überlastung sicher vermieden wird.

Weiterhin ist es zweckmäßig, wenn bei ordnungsgemäß ausgefahrenem Standelement das Standelement selbsttätig in seiner Stellung arretiert wird. Indem die Bedienperson nicht tätig werden muss, um das Standelement zu sichern, wird die Sicherheit des Fahrzeugs erheblich verbessert.

Weitere Vorteile und Einzelheiten der Erfindung werden anhand des in den schematischen Figuren dargestellten Ausführungsbeispiels näher erläutert. Dabei zeigt
- Figur 1: einen erfindungsgemäßen Gabelstapler in Seitenansicht,
- Figur 2: die Führung für die Batterieaufnahme in ausgezogener Stellung,

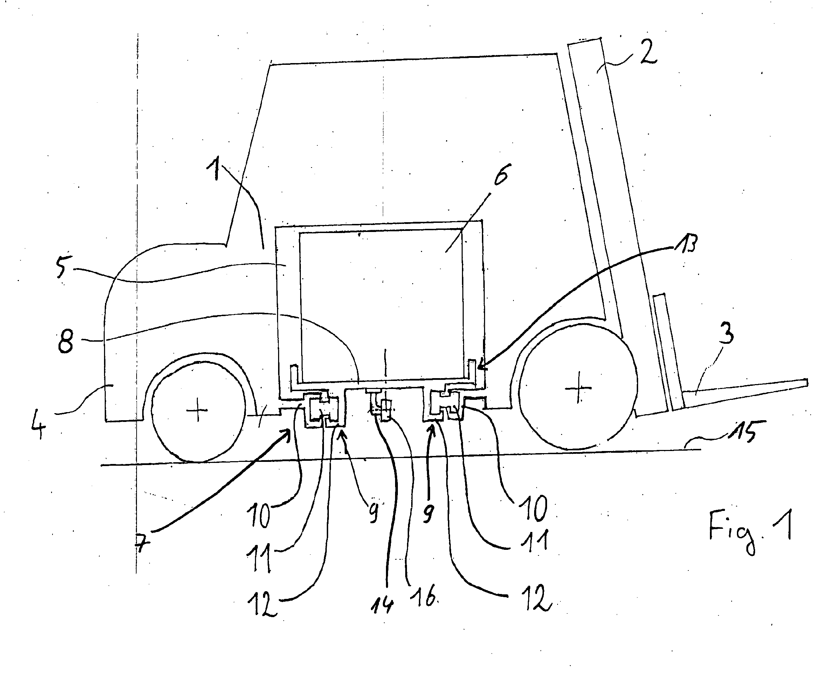

Figur 1 zeigt einen erfindungsgemäßen Gabelstapler in Seitenansicht. Das tragende Element des Gabelstaplers ist ein Fahrzeugrahmen 1. Vorne am Gabelstapler ist ein Hubgerüst 2 mit einem nach oben und unten bewegbaren Lastaufnahmemittel 3 befestigt. Am hinteren Ende des Gabelstaplers befindet sich ein Heckgewicht 4.

In einem Freiraum des Fahrzeugrahmens befindet sich ein seitlich offenes Batteriefach 5, in dem ein Batterieblock 6 auf einer Vorrichtung 7 zur seitlichen Entnahme einer Energieversorgungseinheit steht. Der Batterieblock 6 befindet sich auf einer Batterieaufnahme 8, welche mittels einer teleskopischen Führung 9 in seitlicher Richtung aus dem Batteriefach 5 heraus bewegt werden kann. Die Führung 9 umfasst ein mit dem Fahrzeugrahmen 1 verbundenes Grundelement 10, in dem ein erstes Teleskopelement 11 verschiebbar geführt ist. Ein zweites Teleskopelement 12 wiederum ist in dem ersten Teleskopelement 11 verschiebbar geführt. Das zweite Teleskopelement 12 bildet mit der Batterieaufnahme 8 eine erfindungsgemäße Haltevorrichtung 13.

An der Batterieaufnahme 8 - oder in einer anderen möglichen Ausführungsform direkt an dem zweiten Teleskopelement 12 - ist ein Standelement in Form einer ausfahrbaren Stütze 14 befestigt. Solange sich die Batterieaufnahme 8 innerhalb des Fahrzeugrahmens 1 befindet, ist die Stütze 14 eingefahren und befindet sich innerhalb der Fahrzeugkontur. Sobald sich die Stütze 14 außerhalb des Fahrzeugrahmens 1 befindet, schwenkt sie automatisch aus und stützt die Gewichtskraft des Batterieblocks 6 direkt an der Fahrbahn 15 ab. Am unteren Ende der Stütze 14 befindet sich eine Rolle 16, die während der Ausfahrbewegung des zweiten Teleskopelements 12 auf der Fahrbahn 15 abrollt.

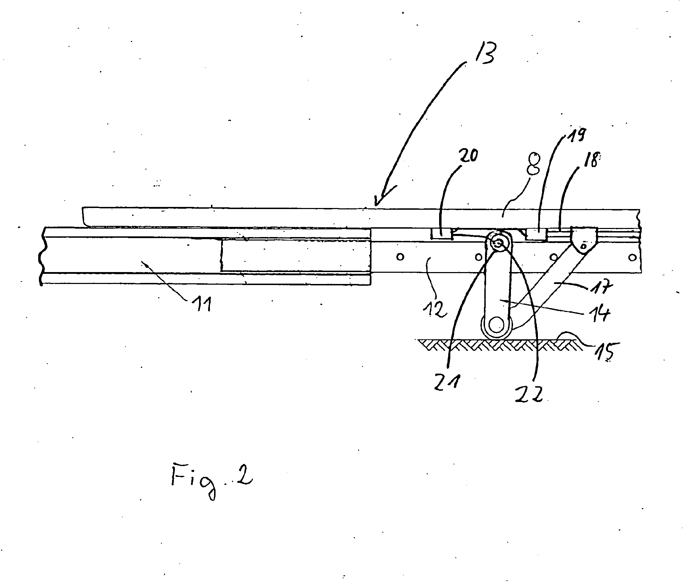

In Figur 2 ist die Führung 9 der vollständig ausgezogenen Batterieaufnahme 8 in Seitenansicht dargestellt. Das zweite Teleskopelement 12 ist an dem ersten Teleskopelement 11 verschiebbar geführt. An der Batterieaufnahme 8 ist die Stütze 14 befestigt, die sich in der ausgefahrenen Stellung (Standposition) auf der Fahrbahn 15 abstützt. Die Stütze 14 trägt zumindest einen Teil der Gewichtskraft eines auf der Batterieaufnahme 8 befindlichen Batterieblocks 6. Die Stütze 14 wird über einen Hebel 17 und einen Spindeltrieb 18 aus- bzw. eingeschwenkt. Der Spindeltrieb 18 wird von einem Elektromotor 19 angetrieben, der über eine Steuerungsvorrichtung 20 angesteuert wird. Bei Stillstand des Elektromotors 19 genügen die Reibungskräfte im Antriebsmechanismus der Stütze 14 um diese zu arretieren.

Die Steuerungsvorrichtung 20 steht mit einem als Potentiometer 21 ausgebildeten Schwenkwinkelsensor in Wirkverbindung, der an der Schwenkachse 22 der Stütze 14 angeordnet ist. Die Steuerungsvorrichtung 20 steuert eine weitere, hier nicht dargestellte Antriebsvorrichtung für das Ein- und Ausfahren der Batterieaufnahme 8 an. In Abhängigkeit von der Ausfahrstellung der Batterieaufnahme 8 gibt die Steuerungsvorrichtung 20 die Position der Stütze 14 vor. Um diese Position zu überwachen, erfasst die Steuerungsvorrichtung 20 die Änderung des Drehwinkels in Abhängigkeit von der Zeit.

Sinkt die Drehgeschwindigkeit unter einen vorbestimmten Wert oder kommt die Bewegung gar zum Stillstand, so ist davon auszugehen, dass die Stütze 14 auf einen Widerstand, insbesondere auf die Fahrbahn 15 getroffen ist, und der Elektromotor 19 wird deaktiviert. Ebenso wird der Elektromotor 19 deaktiviert, wenn ein vorgegebener maximaler oder minimaler Schwenkwinkel überschritten wird. Dadurch wird der Kontakt mit einem mechanischen Endanschlag beim Aus- beziehungsweise Einfahren vermieden und übermäßiger Verschleiß oder Beschädigung der Entnahmevorrichtung 7 vermieden.

Das Potentiometer 21 ist als Doppelspurpotentiometer ausgebildet, wodurch eine redundante Drehwinkelangabe realisiert ist. Die Steuerungsvorrichtung 20 steht mit einer hier nicht dargestellten Steuerungsvorrichtung des Flurförderzeugs in Wirkverbindung und übermittelt an diese Informationen über den Zustand der Batterieentnahmevorrichtung 7, wie beispielsweise, ob die Vorrichtung 13 korrekt aus- bzw. eingefahren ist, ob die Stütze 14 Bodenkontakt hat und ob Fehler vorliegen, wie beispielsweise abweichende Werte der beiden Spuren des Potentiometers 21.

Selbstverständlich sind auch andere Ausführungsformen der Erfindung denkbar. So kann anstelle des Spindeltriebs 18 und des Elektromotors 19 auch eine andere Konfiguration gewählt werden, indem die Stütze 14 beispielsweise mittels eines hydraulischen oder pneumatischen Zylinders ausgeschwenkt wird oder ein Schrittmotor Verwendung findet, der es zudem erlaubt, die Schwenkposition der Stütze 14 zu bestimmen und so einen eigenständigen Sensorfür die Bewegung einzusparen.

Anstelle einer schwenkbar angebrachten Stütze 14 kann das Standelement auch linear ausfahrbar ausgeführt sein. Auch eine Scherenhubkonstruktion als Sonderfall einer schwenkbaren Stütze ist denkbar. Bei Antriebsvorrichtungen, die nicht aufgrund ihrer Konstruktion für eine Arretierung der Stütze in ausgefahrener Stellung geeignet sind, kann auch eine Arretierungsvorrichtung für die Stütze vorgesehen sein.

Anstelle einer eigenständigen Steuerungsvorrichtung 20 kann die Funktion der Entnahmevorrichtung 7 auch über eine Fahrzeugsteuerung vorgenommen werden. Dadurch wird der Aufwand für eine separate Steuerungsvorrichtung 20 eingespart, es ist jedoch nicht mehr möglich, die Entnahmevorrichtung 7 komplett vom Fahrzeug zu entkoppeln und der Verdrahtungsaufwand steigt, da die Fahrzeugsteuerung mit jeder Antriebsvorrichtung der Entnahmevorrichtung 7 verbunden werden muss.

## Patentansprüche

1. Flurförderzeug mit einer Vorrichtung (7) zur seitlichen Entnehme einer Energieversorgungseinheit (6), umfassend mindestens ein in eine Position seitlich des Fahrzeugs bringbare Haltevorrichtung (13) und mindestens ein an der Haltevorrichtung (13) angeordnetes; von einer angehobenen Position bzw Fahrposition in eine auf eine Fahrbahnoberfläche (15) abgesenkte Position bzw Entnahmeposition bewegbares Standelement (14), **dadurch gekennzeichnet, dass** Mittel zur Erfassung der Position des Standelements vorgesehen sind.

2. Flurförderzeug nach Anspruch 1, **dadurch gekennzeichnet, dass** das Standelement (14) schwenkbar an der Haltevorrichtung (13) angeordnet ist.

3. Flurförderzeug nach Anspruch 2, **dadurch gekennzeichnet, dass** die Mittel zur Erfassung der Position des Standelements (14) mindestens einen Schwenkwinkelsensor (21) umfassen.

4. Flurförderzeug nach einem der Ansprüche 1 bis 3, **dadurch gekennzeichnet, dass** das Standelement (14) mittels einer Antriebsvorrichtung von der angehobenen in die abgesenkte Position bewegbar ist.

5. Flurförderzeug nach einem der Ansprüche 1 bis 4, **dadurch gekennzeichnet, dass** die Antriebsvorrichtung Mittel zur Erfassung der Position des Standelements (14) aufweist.

6. Flurförderzeug nach einem der Ansprüche 4 oder 5, **dadurch gekennzeichnet, dass** die Antriebsvorrichtung als elektrische Antriebsvorrichtung, insbesondere umfassend einen Elektromotor (19), ausgebildet ist.

7. Flurförderzeug nach Anspruch 6, **dadurch gekennzeichnet, dass** der Elektromotor (19) als Schrittmotor ausgebildet ist.

8. Flurförderzeug nach einem der Ansprüche 4 bis 7, **dadurch gekennzeichnet, dass** die Antriebsvorrichtung mindestens ein hydraulisches und/oder pneumatisches Antriebselement aufweist.

9. Flurförderzeug nach einem der Ansprüches bis 8, **dadurch gekennzeichnet, dass** mindestens eine Vorrichtung (20) zur Steuerung der Bewegung des Standelements (14) vorgesehen ist.

10. Flurförderzeug nach einem der Ansprüche 3 bis 9, **dadurch gekennzeichnet, dass** der Schwenkwinkelsensor (21) als Potentiometer (21), insbesondere als zweispuriges Potentiometer (21) ausgebildet ist.

11. Flurförderzeug nach einem der Ansprüche 1 bis 10, **dadurch gekennzeichnet, dass** die Mittel zur Erfassung der Position des Standelements (14) mit mindestens einer Steuerungsvorrichtung (20) zur Steuerung der Vorrichtung (7) zur seitlichen Entnahme einer Energieversorgungseinheit (6) in Wirkverbindung stehen.

12. Flurförderzeug nach einem der Ansprüche 9 bis 11, **dadurch gekennzeichnet, dass** die Steuerungsvorrichtung Bestandteil einer Fahrzeugsteuerung ist.

13. Flurförderzeug nach einem der Ansprüche 1 bis 12, **dadurch gekennzeichnet, dass** eine Vorrichtung zur Arretierung des Standelements (14), vorzugsweise in der Standposition, vorgesehen ist.

14. Verfahren zum Betrieb einer Vorrichtung (7) zur seitlichen Entnahme einer Energieversorgungseinheit (6) aus einem Flurförderzeug, umfassend mindestens eine in eine Position seitlich des Fahrzeugs bringbare Haltevorrichtung (13) und mindestens ein an der Haltevorrichtung (13) angeordnetes, von einer angehobenen Position bzw Fahrposition in eine auf eine Fahrbahnoberfläche (15) abgesenkte Position bzw Entnahmeposition bewegbares Standelement (14) **dadurch gekennzeichnet, dass** Mittel zur Erfassung der Position des Standelements, vorgesehen sind und dass die Anderung der Position des Standelements (14) in Abhängigkeit von der Zeit erfasst wird.

15. Verfahren nach Anspruch 14, **dadurch gekennzeichnet, dass** das Standelement (14) als ordnungsgemäß ausgefahren detektiert und eine Antriebsvorrichtung (19) zur Bewegung des Standelements (14) deaktiviert wird, wenn innerhalb einer festgesetzten Zeitspanne keine wesentliche Positionsveränderung des Standelements (14) festgestellt wird,

16. Verfahren nach Anspruch 15, **dadurch gekennzeichnet, dass** bei vollständig ausgefahrenem Standelement (14) das Standelement (14) in seiner Stellung arretiert wird.

## Claims

1. Industrial truck with an apparatus (7) for the lateral removal of an energy supply unit (6), comprising at least one holding apparatus (13), which can be brought into a position to the side of the vehicle, and at least one stand element (14), which is arranged on the holding apparatus (13) and can be moved from a raised position or driving position into a position in which it has been lowered onto a roadway surface (15) or removal position, **characterized in that** means for detecting the position of the stand element are provided.

2. Industrial truck according to Claim 1, **characterized in that** the stand element (14) is arranged pivotably on the holding apparatus (13).

3. Industrial truck according to Claim 2, **characterized in that** the means for detecting the position of the stand element (14) comprise at least one pivot angle sensor (21).

4. Industrial truck according to one of Claims 1 to 3, **characterized in that** the stand element (14) can be moved from the raised position into the lowered position by means of a drive apparatus.

5. Industrial truck according to one of Claims 1 to 4, **characterized in that** the drive apparatus has means for detecting the position of the stand element (14).

6. Industrial truck according to either of Claims 4 and 5, **characterized in that** the drive apparatus is in the form of an electrical drive apparatus, in particular comprising an electric motor (19).

7. Industrial truck according to Claim 6, **characterized in that** the electric motor (19) is in the form of a stepper motor.

8. Industrial truck according to one of Claims 4 to 7, **characterized in that** the drive apparatus has at least one hydraulic and/or pneumatic drive element.

9. Industrial truck according to one of Claims 1 to 8, **characterized in that** at least one apparatus (20) for controlling the movement of the stand element (14) is provided.

10. Industrial truck according to one of Claims 3 to 9, **characterized in that** the pivot angle sensor (21) is in the form of a potentiometer (21), in particular in the form of a two-track potentiometer (21).

11. Industrial truck according to one of Claims 1 to 10, **characterized in that** the means for detecting the position of the stand element (14) are operatively connected to at least one control apparatus (20) for controlling the apparatus (7) for the lateral removal of an energy supply unit (6).

12. Industrial truck according to one of Claims 9 to 11, **characterized in that** the control apparatus is part of a vehicle control system.

13. Industrial truck according to one of Claims 1 to 12, **characterized in that** an apparatus for locking the stand element (14), preferably in the standing position, is provided.

14. Method for operating an apparatus (7) for the lateral removal of an energy supply unit (6) from an industrial truck, comprising at least one holding apparatus (13), which can be brought into a position to the side of the vehicle, and at least one stand element (14), which is arranged on the holding apparatus (13) and can be moved from a raised position or driving position into a position in which it has been lowered onto a roadway surface (15) or removal position, **characterized in that** means for detecting the position of the stand element are provided, and **in that** the change in the position of the stand element (14) is detected as a function of time.

15. Method according to Claim 14, **characterized in that** the stand element (14) is detected as being properly extended and a drive apparatus (19) for moving the stand element (14) is deactivated if no substantial change in the position of the stand element (14) is established within a fixed period of time.

16. Method according to Claim 15, **characterized in that**, when the stand element (14) is completely extended, the stand element (14) is locked in its position.

## Revendications

1. Chariot de manutention comprenant un dispositif (7) pour l'extraction latérale d'une unité d'alimentation en énergie (6), comprenant au moins un dispositif de retenue (13) pouvant être amené dans une position latérale par rapport au véhicule, et au moins un élément de support (14) disposé sur le dispositif de retenue (13) et déplaçable d'une position soulevée, ou position de conduite, dans une position abaissée sur la surface d'une voie de conduite (15), ou position d'extraction, **caractérisé en ce que** des moyens sont prévus pour détecter la position de l'élément de support.

2. Chariot de manutention selon la revendication 1, **caractérisé en ce que** l'élément de support (14) est disposé de manière pivotante sur le dispositif de retenue (13).

3. Chariot de manutention selon la revendication 2, **caractérisé en ce que** les moyens pour détecter la position de l'élément de support (14) comprennent au moins un capteur d'angle de pivotement (21).

4. Chariot de manutention selon l'une quelconque des revendications 1 à 3, **caractérisé en ce que** l'élément de support (14) est déplaçable au moyen d'un dispositif d'entraînement depuis la position soulevée dans la position abaissée.

5. Chariot de manutention selon l'une quelconque des revendications 1 à 4, **caractérisé en ce que** le dispositif d'entraînement présente des moyens pour détecter la position de l'élément de support (14).

6. Chariot de manutention selon l'une quelconque des revendications 4 ou 5, **caractérisé en ce que** le dispositif d'entraînement est réalisé sous forme de dispositif d'entraînement électrique, notamment qui comprend un moteur électrique (19).

7. Chariot de manutention selon la revendication 6, **caractérisé en ce que** le moteur électrique (19) est réalisé sous forme de moteur pas-à-pas.

8. Chariot de manutention selon l'une quelconque des revendications 4 à 7, **caractérisé en ce que** le dispositif d'entraînement présente au moins un élément d'entraînement hydraulique et/ou pneumatique.

9. Chariot de manutention selon l'une quelconque des revendications 1 à 8, **caractérisé en ce qu'**au moins un dispositif (20) est prévu pour commander le déplacement de l'élément de support (14).

10. Chariot de manutention selon l'une quelconque des revendications 3 à 9, **caractérisé en ce que** le capteur d'angle de pivotement (21) est réalisé sous forme de potentiomètre (21), notamment sous forme de potentiomètre à deux voies (21).

11. Chariot de manutention selon l'une quelconque des revendications 1 à 10, **caractérisé en ce que** les moyens pour détecter la position de l'élément de support (14) sont en liaison fonctionnelle avec au moins un dispositif de commande (20) pour commander le dispositif (7) pour l'extraction latérale d'une unité d'alimentation en énergie (6) .

12. Chariot de manutention selon l'une quelconque des revendications 9 à 11, **caractérisé en ce que** le dispositif de commande fait partie d'une commande du véhicule.

13. Chariot de manutention selon l'une quelconque des revendications 1 à 12, **caractérisé en ce que** l'on prévoit un dispositif pour bloquer l'élément de support (14), de préférence dans la position de support.

14. Procédé pour faire fonctionner un dispositif (7) pour l'extraction latérale d'une unité d'alimentation en énergie (6) hors d'un chariot de manutention, comprenant au moins un dispositif de retenue (13) pouvant être amené dans une position latérale par rapport au véhicule, et au moins un élément de support (14) disposé sur le dispositif de retenue (13) et déplaçable d'une position soulevée, ou position de conduite, dans une position abaissée sur la surface d'une voie de conduite (15), ou position d'extraction, **caractérisé en ce que** des moyens sont prévus pour détecter la position de l'élément de support et **en ce que** l'on détecte la variation de la position de l'élément de support (14) en fonction du temps.

15. Procédé selon la revendication 14, **caractérisé en ce que** l'élément de support (14) est détecté comme sorti de manière conforme, et un dispositif d'entraînement (19) pour le déplacement de l'élément de support (14) est désactivé lorsque, en l'espace d'un intervalle de temps fixé, aucune variation de position notoire de l'élément de support (14) n'a été établie.

16. Procédé selon la revendication 15, **caractérisé en ce que** lorsque l'élément de support (14) est complètement sorti, l'élément de support (14) est bloqué en position.
